# EUROPÄISCHE PATENTANMELDUNG

(11) **EP 2 369 260 A2**
(43) Veröffentlichungstag der Anmeldung: **28.09.2011**
(21) Anmeldenummer: 11157068.5
(22) Anmeldetag: 04.03.2011
(51) Int. Cl.: F24J 2/26, F24J 2/46, F24J 2/51

(54) **Sonnenkollektor**

(30) Priorität: 15.03.2010 DE 102010012001
(71) Anmelder: Dr. Doll Holding GmbH, 74193 Schwaigern (DE)
(72) Erfinder: Doll, Theo, Dr., 74193 Schwaigern (DE)
(74) Vertreter: Patentanwälte Ruff, Wilhelm, Beier, Dauster & Partner

(57) **Zusammenfassung**

2.1. Die Erfindung betrifft einen Sonnenflachkollektor (10) mit einem Flachgehäuse (20), einem das Flachgehäuse (20) an einer Sonnenseite abschließenden transparenten Eintrittsflächenelement (12), einem Absorber (42) sowie einer Flüssigkeitsleitung (44) und einem Isolator (62).

2.2. Erfindungsgemäß ist vorgesehen, dass das Flachgehäuse (20) zwei voneinander getrennte Flachkammern (40, 60) definiert, wobei in einer ersten Kammer (40), die auf der Eintrittsseite des Sonnenflachkollektors (10) angeordnet ist, der Absorber (42) vorgesehen ist und in einer zweiten Kammer (60), die rückseitig der ersten Kammer (40) vorgesehen ist, der Isolator angeordnet ist.

2.3. Verwendung, um die Verunreinigung des Absorbers und des Eintrittsflächenelements durch Partikel des Isolators zu vermeiden.

## Beschreibung

Die Erfindung betrifft einen Sonnenflachkollektor mit einem Flachgehäu_{~} se, einem das Flachgehäuse an einer Sonnenseite abschließenden transparenten Eintrittsflächenelement, einem Absorber sowie einer Flüssigkeitsleitung und einem Isolator.

Gattungsgemäße Sonnenflachkollektoren sind aus dem Stand der Technik bekannt. Sie dienen der Erhitzung einer Flüssigkeit, insbesondere von Wasser, durch Absorption von Sonnenenergie. Gattungsgemäße Sonnenflachkollektoren weisen ein üblicherweise in etwa wannenförmiges Flachgehäuse auf, in welchem der Absorber mitsamt mindestens einer Flüssigkeitsleitting angeordnet ist. Dieses Flachgehäuse wird durch das Eintrittsflächenelement, beispielsweise ein Solarsicherheitsglas oder eine Kunststoffscheibe, gegenüber witterungsbedingten negativen Einflüssen geschützt. Gleichzeitig bewirkt das Eintrittsflachenelement einen gewünschten Treibhauseffekt innerhalb einer Absorberkammer.

Auf der der Sonnenseite abgewandten Seite des Absorbers ist bei gattungsgemäßen Sonnenflachkollektoren ein Isolator angeordnet, der beispielsweise in Form einer Matte aus Steinwolle in die Absorberkammer eingelegt ist. Dieser Isolator verhindert bestimmungsgemäß, dass die innerhalb des Flachgehäuses sich einstellende Wärme durch das Gehäuse, insbesondere dessen Rückwandung, hindurch entweicht, ohne die Flüssigkeit bestimmungsgemäß zu erwärmen.

Als nachteilig an dem üblichen Aufbau wird angesehen, dass Partikel des Isolators, insbesondere Fasern eines faserigen Isolators, sich vom restlichen Isolator trennen können und infolgedessen zum Einen ihre bestimmungsgemäße Isolationswirkung nicht mehr erfüllen können und sich zum Anderen an ungewünschten Stellen innerhalb des Gehäuses niederschlagen, insbesondere auf dem Eintrittsflächenelement, so dass die durch den Absorber absorbierbare Sonnenenergie sinkt.

Nachteilig ist weiterhin, dass der Isolator eine Gestaltung mit einer vergleichweise großen Absorberkammer erzwingt, in der sich im Betrieb recht viel Feuchtigkeit sammeln kann. Diese Feuchtigkeit sammelt sich dabei insbesondere im Isolator selbst. Sie führt beim Erwärmen des Flachkollektors zum Niederschlag von Flüssigkeit auf dem transparenten Eintrittsflächenelement und verschlechtert somit die Absorption von Sonnenenergie.

### Aufgabe und Lösung

Aufgabe der Erfindung ist es, einen gattungsgemäßen Sonneriflachkollektor dahingehend weiterzubilden, dass die Nachteile des Standes der Technik vermieden oder zumindest vermindert werden.

Erfindungsgemäß wird dies dadurch erreicht, dass das Flachgehäuse zwei voneinander getrennte Flachkammern definiert, wobei in einer ersten Kammer, die auf der Eintrittsseite des Sonnenflachkollektors angeordnet ist, der Absorber vorgesehen ist und wobei in einer zweiten Kammer, die rückseitig der ersten Kammer vorgesehen ist, der Isolator angeordnet ist.

Bei einem erfindungsgemäßen Sonnenflachkollektor ist demnach vorgesehen, dass der Isolator in einer von der ersten Kammer (Absorberkammer) getrennten zweiten Kammer (Isolatorkammer) angeordnet ist, die gegenüber der ersten Kammer getrennt ist. Dadurch ist gewährleistet, dass keinerlei Partikel des Isolators in die erste Kammer gelangen können, und es wird somit wirksam verhindert, dass diese Partikel sich auf dem Eintrittsflachenelement oder dem Absorber niederschlagen und somit den Wirkungsgrad des Sonnenflachkollektors verschlechtern. Die Kammern sind vorzugsweise luftdicht gegeneinander abgedichtet, so dass auch feine Partikel des Isolators nicht in die Absorberkammer gelangen können. Weiterhin führt die Gestaltung mit getrennten Kammern dazu, dass die Absorberkammer vergleichsweise kleinvolumig ausgebildet sein kann, so dass sich hierin weniger Flüssigkeit sammeln kann. Durch das Fehlen des Isolators in der Absorberkammer wird zudem verhindert, dass dieser die eindringende Flüssigkeit speichert.

Das Flachgehäuse dient insbesondere als Träger des Eintrittsflächenelementes, des Absorbers und/oder des Isolators. Als Flachgehäuse weist es eine Länge und eine Breite auf, die wesentlich größer als die Tiefe des Gehäuses sind. Die Länge und die Breite sind vorzugsweise mindestens dreimal so groß wie die Tiefe des Gehäuses, Die Länge und Breite betragen vorzugsweise mindestens 50cm, insbesondere vorzugsweise mindestens 70cm. Die Höhe beträgt vorzugsweise maximal 30cm, insbesondere vorzugsweise maximal 20cm. Die bevorzugten Maße für die Länge und die Breite liegen zwischen 1 m und 2,5 m. Besonders bevorzugte erfindungsgemäße Kollektoren weisen Maße zwischen 1,0 m x 2,0 m und 1,3 m x 1,8 m auf. Das Gehäuse definiert auf der Sonnenseite die erste Kammer, die den Absorber beinhaltet. Diese erste Kammer wird in Richtung der Sonnenseite durch das Eintrittsflächenelement abgeschlossen. Bei dem Absorber handelt es sich vorzugsweise um eine Absorptionsplatte, die die Wärme aufnimmt, bevor diese zur Erhitzung des in der Flüssigkeitsleitung geführten Wasser führt.

Der Isolator, der in der zweiten Kammer angeordnet ist, ist flächig ausgebildet und weist vorzugsweise in etwa die gleiche (+/- 20%) Grundfläche wie der vorzugsweise als Absorberplatte ausgebildete Absorber auf.

Die beiden Kammern weisen vorzugsweise ebenfalls in etwa die gleiche Grundfläche auf (+/- 20%). Das Gehäuse umgibt die beiden Kammern außenseitig in Art eines Rahmens, wobei Aussparungen oder Durchbrechungen dieses Rahmens im Bereich der ersten Kammer zur Zuführung der Flüssigkeitsleitung vorgesehen sein können. Das Gehäuse, insbesondere die Gehäusewandungen, sind vorzugsweise aus Kunststoff gefertigt.

Eine Trennwandung zwischen den Kammern kann separat von einem vorzugsweise einstückigen Rahmenteil des Gehäuses ausgebildet sein und mit diesem nach der separaten Herstellung des Rahmens und der Trennwandung verbunden worden sein. Von besonderem Vorteil ist es jedoch, wenn die Trennwandung einstückig als Trennwandungsabschnitt mit einem umlaufenden Rahmenbereich des Gehäuses verbunden ist. Hierdurch wird eine besonders einfache Form der Fertigung erzielt, da auf einen separaten Fertigungsschritt zur Verbindung der Trennwandung mit dem Rahmenbereich verzichtet werden kann. Auch kann hierdurch auf einfache Weise eine vollständige Abdichtung der Kammern gegeneinander erzielt werden.

Wie oben bereits erläutert, ist die erste der beiden Kammern auf der Sonnenseite des Gehäuses vorgesehen, so dass sie für die durch das Eintrittsflächenelement hindurchstrahlende Sonnenstrahlung zugänglich ist. Die zweite Kammer kann als allseitig von dem Flachgehäuse Gehäuse umgebene Kammer ausgebildet sein. Bevorzugt ist es jedoch, wenn die erste und die zweite Kammer jeweils durch Vertiefungen an der Sonnenseite bzw. der gegenüberliegenden Rückseite des Gehäuses gebildet sind. Hierdurch wird erzielt, dass nach Herstellung des Gehäuses die Fertigstellung des Sonnenflachkollektors sehr einfach ist, da auf einfache Weise an der Sonnenseite der Absorber und die Flüssigkeitsleitung sowie das Eintrittsflächenelement in die erste Kammer eingebracht werden können und da auf der Rückseite ohne Schwierigkeiten der Isolator eingelegt werden kann. Vorzugsweise wird die Rückseite durch ein vom Gehäuse getrenntes Plattenelement verschlossen.

Das Gehäuse kann aus mehreren stoffschlüssig, vorzugsweise thermisch miteinander verbundenen Teilen bestehen, beispielsweise aus in entgegengesetzte Richtung offenen wannenförmigen Körpern, die separat voneinander hergestellt werden und anschließend miteinander verbunden werden. Von besonderem Vorteil ist es jedoch, wenn das Gehäuse aus zwei unter Hitzeeinwirkung per Tiefziehen in Form gebrachten und vorzugsweise stoffschlüssig miteinander verbundenen Platten aufgebaut ist, wobei die erste Platte eine Innenwandung der ersten Kammer bildet und wobei die zweite Platte eine Innenwandung der zweiten Kammer bildet. Das genannte Verfahren ist unter dem Namen Twin-Sheet-Verfahren bekannt Es erlaubt die Herstellung eines Hohlkörpers in einem einstufigen Verfahren, bei dem gleichzeitig oder nahezu gleichzeitig bewirkt werden kann, dass die beiden zuvor planen Platten die Form zweier gegenüberliegenden Formen annehmen und in einem Kontaktbereich thermisch miteinander verbunden werden. Dieses Twin-Sheet-Verfahren eignet sich sehr gut für die Herstellung eines erfindungsgemäßen Sonnenflachkollektors. Durch eine entsprechende Formgebung der Formen können die beiden Vertiefungen auf gegenübesiegenden Seiten des Flachgehäuses besonders einfach erzeugt werden.

Besonders von Vorteil ist es, wenn der durch das Twin-Sheet-Verfahren hergestellte doppelwandige Körper in seinem Innenraum ausgeschäumt ist, insbesondere mit einem Polyurethan-Schaum, der nach dem Einspritzen aushärtet und dem Sonnenflachkollektor dadurch trotz vergleichsweise dünner Gehäusewandungen und trotz der beiden Kammern ein hohes Maß an Stabilität gibt. Die Wirkung der Ausschäumung liegt darüber hinaus darin, dass eine Luftfluktuation innerhalb des doppelwandigen Körpers vermieden wird. Es wurde festgestellt, dass in der im Nutzzustand üblicherweise gegebene Schrägstellung des Sonnenflachkollektors innerhalb der Trennwandung eine die Effizienz des Sonnenflachkollektors vermindernde Luftzirkulation stattfindet, bei der die Luft im Hohlraum auf Seiten der ersten Kammer in Folge ihrer Erwärmung ansteigt, ihre Wärme auf der gegenüberliegenden Seite an der an die zweite Kammer angrenzenden Fläche des Hohlkörpers abgibt und dort wieder absinkt. Diese permanente Luftzirkulation führt zu einer nicht nutzbaren Erwärmung der zweiten Kammer und des darin enthaltenen Isolators. Die hierfür aufgewendete Energie ist für die bestimmungsgemäße Nutzung verloren.

Eine Alternative zur Ausschäumung liegt darin, dass die Trennwandung zwischen den Kammern mit einer Mehrzahl von Einzelkammern ausgebildet sein kann, die durch Trennstege voneinander getrennt sind. Diese in der Trennwandung angeordneten Einzelkammern sind ebenfalls in der Lage, die oben genannte Luftzirkulation wirksam zu verhindern.

Zu diesem Zweck sind die Kammern vorzugsweise derart ausgebildet, dass sie bezogen auf eine schrägstehende Nutzstellung des Sonnenflachkollektors eine Luftfluktuation bzw. -zirkulation innerhalb der Trennwandung zumindest in der Ebene der Trennwandung nach oben verhin" dern. Die Nutzstellung des Sonnenflachkollektors, die beispielsweise durch ein zum Sonnenflachkollektor gehörendes Gestell oder eine entsprechende Schrägstellung einer Anbringungsfläche, beispielsweise eines Hausdaches, erzielt wird, beträgt üblicherweise und vorzugsweise etwa 30 bis 60°. Die gemäß dieser Weiterbildung vorgesehene Anordnung der Kammern verhindert, dass die Luft in der Trennwandung diesem Winkel folgend innerhalb der Trennung ansteigen kann und dabei die oben genannte Luftzirkulation gestattet.

Die Trennstege sind vorzugsweise dadurch vorgesehen, dass in die Trennwandung ein separat handhabbarer plattenartiger oder mattenartiger Körper eingelegt ist, der die Trennstege aufweist. Unter einem solchen separat handhabbaren Körper wird eine Gesamtheit von Trennstegen angesehen, die bei der Erzeugung des Hohlkörpers, beispielsweise im Twin-Sheet-Verfahren, in den zu bildenden Hohlraum eingelegt wird. Es müssen somit nicht die Außenwandungen, die den Hohlkörper bilden, bereits mit den Trennstegen ausgebildet sein. Die Fertigung durch das Einlegen eines alle oder einen großen Teil der Trennstege bildenden Körpers ist sehr einfach.

In einer Draufsicht auf die Trennwandung sind die Kammern, die durch die Trennstege gebildet werden, vorzugsweise als dreieckige, viereckige oder sechseckige Kammern ausgebildet. Alternativ hierzu können die Kammern auch als sich über die gesamte Trennwandung in einer horizontalen Erstreckungsrichtung der Trennwandung erstreckende Kammern ausgebildet sein.

Bei einem erfindungsgemäßen Sonnenflachkollektor ist der Isolator vorzugsweise als in die zweite Kammer eingelegte Matte ausgebildet. Insbesondere kann der Isolator aus einem Fasermaterial wie beispielsweise aus Mineralwolle, Steinwolle, Glaswolle, Glasfaser oder Fiberglas oder aber aus einem Schaum wie beispielsweise PP-Schaum bestehen. Insbesondere bei diesen Materialien ist die erfindungsgemäße Gestaltung des Sonnenflachkollektors von Vorteil, da die genannten Materialien zur Abgabe von Fasern sowie zum Ausdampfen von Chemikalien und damit zur Verschlechterung des Wirkungsgrades des Sonnenflachkollektors neigen. Beim Schaum, der auch als geschreddertes Material Anwendung finden kann, kann es sich beispielsweise um ein preisgünstiges Recyclingmaterial handeln. Insbesondere bei solchem oder anderem Recyclingmaterial, welches im Isolator verwendet wird, ist das Vorsehen der getrennter Isolatorkammer von Vorteil, da in solchem Recyclingmaterial oftmals unbekannte chemische Rückstände vorhanden sind, die aufgrund der getrennter Isolatorkammer nicht in die Absorberkammer gelangen und somit die Absorption nicht negativ beeinflussen können.

### Kurzbeschreibung der Zeichnungen

Weitere Aspekte und Vorteile der Erfindung ergeben sich aus Ausführungsbeispielen der Erfindung, welche nachfolgend anhand der Figuren erläutert werden. Dabei zeigen:
- Fig. 1: einen erfindungsgemäßen Sonnenflachkollektor in einer geschnittenen Querschnittsdarstellung,
- Fig. 2: das Gehäuse des Sonnenflachkollektors der Fig. 1 in einer geschnittenen perspektivischen Darstellung.
- Fig. 3a und 3b: alternative Gestaltungen des Sonnenflachkollektors der Fig. 1 und 2, die sich hinsichtlich der Ausgestaltung einer Trennwandung von der ersten Ausgestaltung unterscheiden.

### Detaillierte Beschreibung der Ausführungsbeispiele

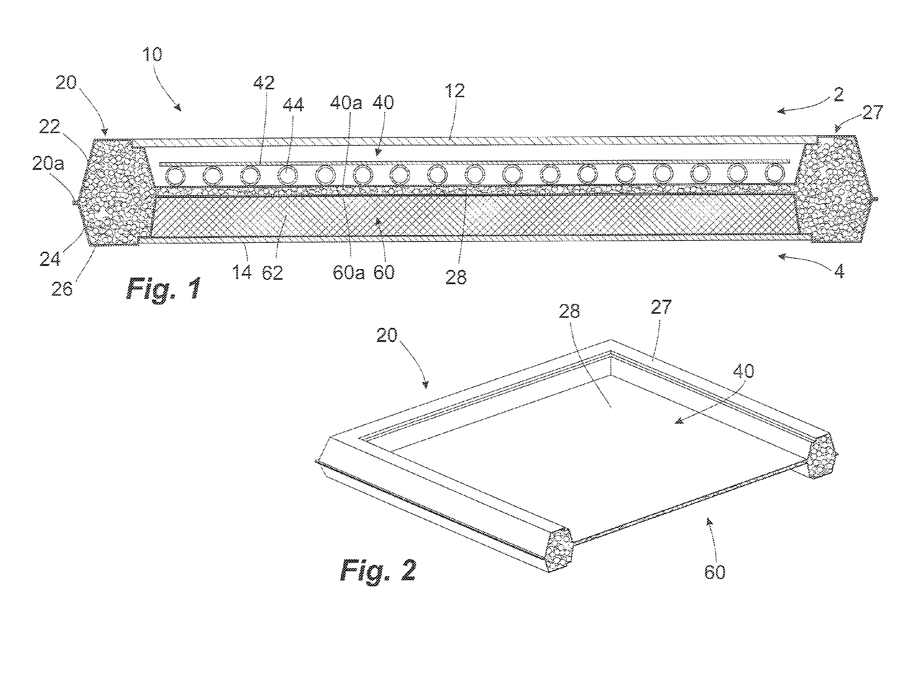

Fig. 1 zeigt einen erfindungsgemäßen Sonnenflachkollektor 10 in einer geschnittenen Darstellung. Der Sonnenflachkollektor 10 weist ein Gehäuse 20 mit einer in etwa rechteckigen Grundfläche auf, welches zum besseren Verständnis in Fig. 2 nochmals dargestellt ist.

Das Gehäuse 20 besteht aus zwei Kunststoffplatten 22, 24, die unter Hitzeeinwirkung plastisch verformt wurden und in einem Randbereich 20a umlaufend miteinander verbunden sind. Die Platten 22, 24 umgeben einen geschäumten Gehäusekern 26 aus Polyurethan-Schaum. Dies führt zu einer sehr hohen Stabilität des Gehäuses 20. Die im Twin-Sheet-Verfahren plastisch verformten Platten 22, 24 weisen jeweils eine konkave Formgebung auf, wodurch die obere Platte 22 eine erste Kammer 40 definiert und wodurch die untere Platte 24 eine zweite Kammer 60 definiert. Im Randbereich sind die Platten 22, 24 jeweils so geformt, dass sie einen die Vertiefungen 40, 60 umgebenden Rahmen 27 bilden.

Der Grund 40a der ersten Kammer 40 und der Grund 60a der zweiten Kammer 60 liegen sehr nahe beieinander, so dass die zwischen ihnen liegende Trennwandung 28 vergleichsweise dünn ist und nur einen Bruchteil des insgesamt verwendeten PU-Schaums aufnimmt.

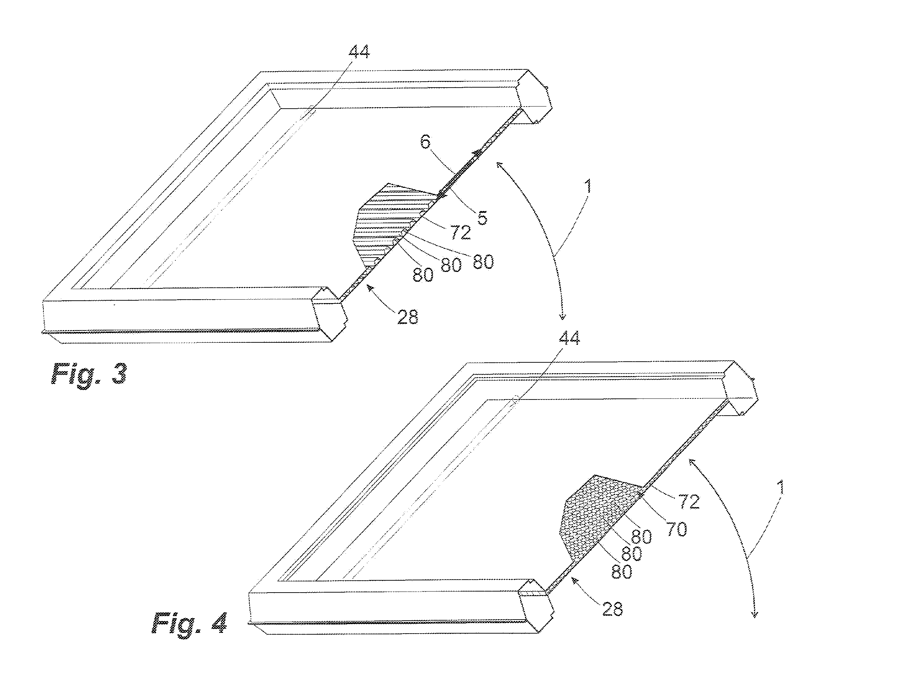

Der Polyurethan-Schaum in der Trennwandung 28 hat neben einer aussteifenden Wirkung auch die Funktion, eine Luftzirkulation in der Trennwandung zu vermeiden, durch die eine ungewünscht hohe Wärmemenge aus der ersten Kammer 40 in die zweite Kammer 60 gelangen kann. Dies wird nachfolgend noch anhand der Ausführungsbeispiele der Fig. 3 und 4 erläutert.

Die obere Kammer 40 an der Sonnenseite 2 bildet eine Absorberkammer. In der Absorberkammer 40 ist in der in Fig. 1 dargestellten Weise eine Absorberplatte 42 angeordnet, die auf Flüssigkeitsrohren 44 aufliegt. Diese Absorberplatte 42 kann durch Sonnenenergie, die durch eine Glasscheibe 12 einstrahlt, erhitzt werden, so dass die dadurch aufgenommene Wärmeenergie anschließend zur Erwärmung der in den Flüssigkeitsrohren 44 geführten Flüssigkeit führt. Die Flüssigkeitsrohre 44 sind in nicht näher dargestellter Weise durch den Rand des Gehäuses 20 nach außen geführt.

Um den Wärmeverlust des Sonnenflachkollektors 10 an der Rückseite 4 zu begrenzen, ist eine Isolatormatte 62 in die als lsolatorkammer agierende zweite Kammer 60 eingelegt. Diese Isolatormatte 62 besteht aus Steinwolle.

Durch die Anordnung der Isolatormatte 62 in der zweiten Kammer, ist gewährleistet, dass keine Partikel der lsolatormatte 62 bis in die erste Kammer 40, die Absorberkammer, gelangen können. Die lsolatorkammer 60 ist auf der der Absorberkammer 40 abgewandten Seite durch eine Abdeckplatte 14 verschlossen.

Die Fig. 3 und 4 zeigen alternative Ausgestaltungen eines Sonnenflachkollektors 10 in einer Nutzstellung. Wie durch den Pfeil 1 verdeutlicht, sind die Sonnenflachkollektoren in ihrer Nutzstellung gegenüber einer Horizontalen um etwa 45 ° angewinkelt, wobei die in den Fig. 3 und 4 nur exemplarisch dargestellten Flüssigkeitsrohre 44 so angeordnet sind, dass sie ebenfalls in diesem Winkel gegenüber der Horizontalen ansteigend angeordnet sind.

In dieser Nutzstellung ist zu befürchten, dass sich innerhalb der Trennwandung 28 eine so genannte Luftwalze bildet. Bei dieser steigt bedingt durch die Erwärmung die Luft in der Trennwandung 28 an der der ersten Kammer 40 zugewandten Seite an und kühlt sich derweil nach und nach an der gegenüberliegenden zur zweiten Kammer 60 hinweisenden Seite ab, um dort wieder abzusinken. Dies wird in Fig. 3 durch die Pfeile 5 und 6 verdeutscht.

Die Fig. 3 und 4 zeigen Ausgestaltungen, bei denen zur Verhinderung dieses Effekts Einzelkammern 80 in der Trennwandung vorgesehen sind. Diese Einzelkammern 80 werden durch eine dort eingelegte Matte 70 aus miteinander zusammenhängenden Trennstegen 72 gebildet. Im Falle der Ausgestaltung der Fig. 3 handelt es sich um eine eingelegte Platte mit bezogen auf die Nutzstellung horizontal ausgerichteten und sich über die gesamte Breite des Sonnenflachkoltektors erstreckenden Kammern 72. Im Falle der Ausgestaltung der Fig. 4 handelt es sich um wabenförmige Kammern 72. Für die Herstellung können diese beispielsweise aus Kunststoff oder Zellstoff/Patte bestehenden Platten 70 vorgefertigt werden, um dann als Ganzes vor der Anwendung des Twin-Sheet-Verfahrens oder eines anderweitigen Verfahrens zur Herstellung eines Hohlkörpers zwischen die beiden in entgegengesetzte Richtung weisenden Flächen eingelegt zu werden, die anschließend den Grund der Absorberkammer 40 und der Isolatorkammer 60 bilden. Neben ihrer die Luftzirkulation verhindernden Wirkung haben auch solche Matten eine aussteifende Wirkung, ohne dabei jedoch die Masse des Sonnenflachkollektors signifikant zu erhöhen.

## Patentansprüche

1. Sonnenflachkollektor (10) mit
- einem Flachgehäuse (20),
- einem das Flachgehäuse (20) an einer Sonnenseite abschließenden transparenten Eintrittsflächenelement (12),
- einem Absorber (42) sowie einer Flüssigkeitsleitung (44) und
- einem Isolator (62),
**dadurch gekennzeichnet, dass**
das Flachgehäuse (20) zwei voneinander getrennte Flachkammern (40, 60) definiert, wobei
- in einer ersten Kammer (40), die auf der Eintrittsseite des Sonnenflachkollektors (10) angeordnet ist, der Absorber (42) vorgesehen ist und
- in einer zweiten Kammer (60), die rückseitig der ersten Kammer (40) vorgesehen ist, der Isolator angeordnet ist.

2. Sonnenflachkollektor (10) nach Anspruch 1,
**dadurch gekennzeichnet, dass**
eine Trennwandung (28) zwischen der ersten und der zweiten Kammer (40, 60) einstückig als Trennwandungsabschnitt (28) mit einem umlaufenden Rahmenbereich (27) des Flachgehäuses (20) verbunden ist.

3. Sonnenflachkollektor (10) nach Anspruch 1 oder 2,
**dadurch gekennzeichnet, dass**
die erste und die zweite Kammer (40, 60) jeweils durch Vertiefungen (40, 60) an der Sonnenseite und der Rückseite des Flachgehäuses (20) gebildet sind.

4. Sonnenflachkollektor (10) nach einem der vorstehenden Ansprüche,
**dadurch gekennzeichnet, dass**
das Flachgehäuse (20) aus zwei unter Hitzeeinwirkung per Tiefziehen geformten und vorzugsweise stoffschlüssig miteinander verbundenen Platten (22, 24) aufgebaut ist, wobei die erste Platte (22) eine innenwandung der ersten Kammer (40) bildet und wobei die zweite Platte (24) eine lnnenwandung der zweiten Kammer (60) bildet.

5. Sonnenflachkollektor (10) nach einem der vorstehenden Ansprüche,
**dadurch gekennzeichnet, dass**
das Gehäuse (20) als Hohlkörper (22, 24) ausgebildet ist, insbesondere als ausgeschäumter Hohlkörper (22, 24)

6. Sonnenflachkollektor (10) nach einem der Ansprüche 1 bis 4,
**dadurch gekennzeichnet, dass**
eine Trennwandung (28) zwischen den Kammern (40, 60) mit einer Mehrzahl von Einzelkammern (80) ausgebildet ist, die durch Trennstege (72) voneinander getrennt sind.

7. Sonnenflachkollektor (10) nach einem der Ansprüche 6,
**dadurch gekennzeichnet, dass**
die Einzelkammern (80) derart ausgebildet sind, dass sie bezogen auf eine schrägstehende Nutzstellung des Sonnenflachkollektors eine Luftfluktuation innerhalb der Trennwandung zumindest in der Ebene der Trennwandung (28) nach oben verhindern.

8. Sonnenflachkollektor (10) nach einem der Ansprüche 6 oder 7,
**dadurch gekennzeichnet, dass**
in die Trennwandung (28) ein separat handhabbarer Körper (70) eingelegt ist, der die Trennstege (72) aufweist.

9. Sonnenflachkollektor (10) nach einem der Ansprüche 6 bis 8,
**dadurch gekennzeichnet, dass**
die Einzelkammern (80) in Draufsicht auf die Trennwandung (28) eine dreieckige, viereckige oder sechseckige Form aufweisen oder als sich über die gesamte Trennwandung (28) in einer Erstreckungsrichtung der Trennwandung (28) erstreckende Einzelkammern (80) ausgebildet sind.

10. Sonnenflachkollektor (10) nach einem der vorstehenden Ansprüche,
**dadurch gekennzeichnet, dass**
der Isolator (62) aus einem Fasermaterial, insbesondere aus Mineralwolle, Steinwolle, Glaswolle, Glasfaser oder Fiberglas, oder aus einem Schaum, beispielsweise PP-Schaum, besteht.
